# EUROPEAN PATENT APPLICATION

(11) **EP 2 662 754 A1**
(43) Date of publication of application: **13.11.2013**
(21) Application number: 12167378.4
(22) Date of filing: 09.05.2012
(51) Int. Cl.: G06F 3/033, G06F 3/046

(54) **Computer input stylus with multiple antennas**

(71) Applicant: BlackBerry Limited, Waterloo, ON N2L 3W8 (CA)
(72) Inventor: Besperstov, Iouri Petrovitch, Waterloo, Ontario N2L 3W8 (CA); Singh, Amit Pal, Waterloo, Ontario N2L 3W8 (CA); Parekh, Premal, Waterloo, Ontario N2L 3W8 (CA)
(74) Representative: Greenaway, Martin William

(57) **Abstract**

The present disclosure provides a stylus for enabling inputs to be made to a host electronic device. The stylus has multiple antennas that are displaced from each other and the tip of the stylus body. In operation, the antennas are excited to each radiate an electromagnetic field directed towards the tip of the stylus. The radiated electromagnetic fields may be sensed by the host electronic device to determine the position of the tip relative to a sensing surface.

## Description

### BACKGROUND

A stylus is a pen-like computer input device that provides position input to an application program executing on a host electronic device. The position of the stylus may be determined by any of a variety of techniques. For example, the position may be detected by a grid of sensors embedded in a drawing surface. The grid of sensors detects an electromagnetic field radiated from the antenna of the stylus. Since it is impractical to place the antenna at the very tip of the stylus, the electromagnetic field received by the grid of sensors is dependent, in part, on the tilt of the stylus with respect to the grid of sensors. This can reduce the accuracy to which the position of the stylus tip is sensed. Any reduction in tip position accuracy will degrade the performance of an application responsive to stylus input, such as a computer drawing application.

### BRIEF DESCRIPTION OF THE DRAWINGS

Exemplary embodiments of the present disclosure will be described below with reference to the included drawings such that like reference numerals refer to like elements and in which:

**FIG. 1** is a diagram of a computer drawing system, in accordance with illustrative embodiments of the present disclosure.

**FIG. 2** is a block diagram of a controller of a host electronic device, in accordance with exemplary embodiments of the present disclosure.

**FIG. 3** is a diagram of a stylus, in accordance with embodiments of the present disclosure.

**FIG's 4** and 5 are diagrammatic representations of electromagnetic field patterns, in accordance with illustrative embodiments of the present disclosure; and

**FIG. 6** is a flow chart of a method for sensing stylus tip location, in accordance with aspects of the present disclosure.

### DETAILED DESCRIPTION

For simplicity and clarity of illustration, reference numerals may be repeated among the figures to indicate corresponding or analogous elements. Numerous details are set forth to provide an understanding of the illustrative embodiments described herein. The embodiments may be practiced without these details. In other instances, well-known methods, procedures, and components have not been described in detail to avoid obscuring the disclosed embodiments. The description is not to be considered as limited to the scope of the embodiments shown and described herein.

The present disclosure relates to a computer-input stylus for providing position information to a host electronic device, such as, for example, a laptop computer, tablet computer, mobile phone, personal digital assistant (PDA), display screen, or other portable or non-portable electronic device.

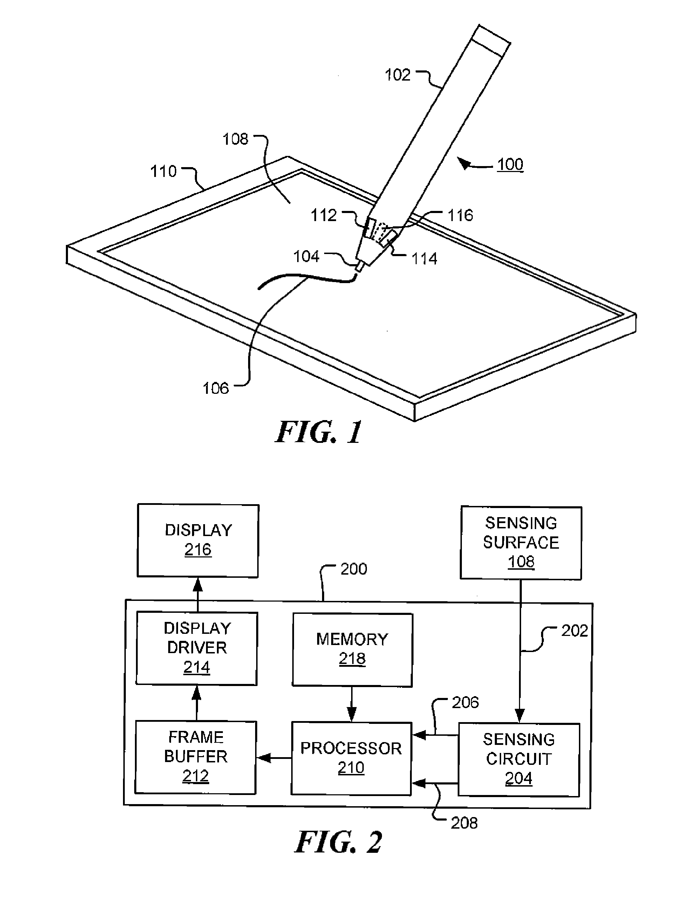

**FIG. 1** is a diagram of computer drawing system in accordance with aspects of the present disclosure. A pen-like stylus 100 has a body 102 and a tip 104. The stylus 100 causes an image, such as a line 106, to be drawn on a sensing surface 108 of a host electronic device 110. In the embodiment shown, the sensing surface 108 can also be operated as a display screen and the line 106 rendered on the display screen follows the trajectory of the stylus 100 as it moves across the surface of the sensing surface 108. In a further embodiment, the sensing surface 108 is separate from the display surface.

The stylus 100 includes a plurality of directional antennas, 112, 114 and 116, for example, coupled to the body 102. The antennas are displaced from each other and from the tip 104 along the body 102. In operation, the antennas radiate an electromagnetic field directed towards the tip 104.

In the exemplary embodiment shown in **FIG. 1**, three directional antennas, 112, 114 and 116, are shown. The antennas are spaced at substantially 120° intervals around the longitudinal axis of the stylus 100. However, other arrangements using two or more antennae at various positions may be employed without departing from the present disclosure.

The stylus body 102 may house a communication circuit that is used to drive the antenna. In some embodiments, the antennas are located equidistant from the tip of the stylus, in which case the antennas may be driven in phase with one another.

In operation, the electromagnetic field produced by the antennas is received by the sensing surface 108 of the host electronic device 110.

**FIG. 2** is a block diagram of an example controller 200 of a host electronic device. The controller 200 receives a sensed signal 202 from the sensing surface 108. The sensed signal 202 is dependent upon the electromagnetic field generated by the stylus and the position of the stylus relative to the sensing surface. A sensing circuit 204, which is responsive to the sensed signal, detects a position of maximum electromagnetic field on the sensing surface 108 and outputs coordinates 206 and 208 of the detected position. A processor 210 updates an image frame dependent upon the coordinates 206 and 208 of the detected position, and passes the updated image frame to a frame buffer 212. A display driver 214 accesses the frame buffer 212 and renders image frames on a display screen 216. The display screen 216 may be integrated with the sensing surface 108 or separate from it. Memory 218 is accessed by the processor 210 and may be used to store computer-executable instructions for controlling the processor. The memory 218 may also be used to store data.

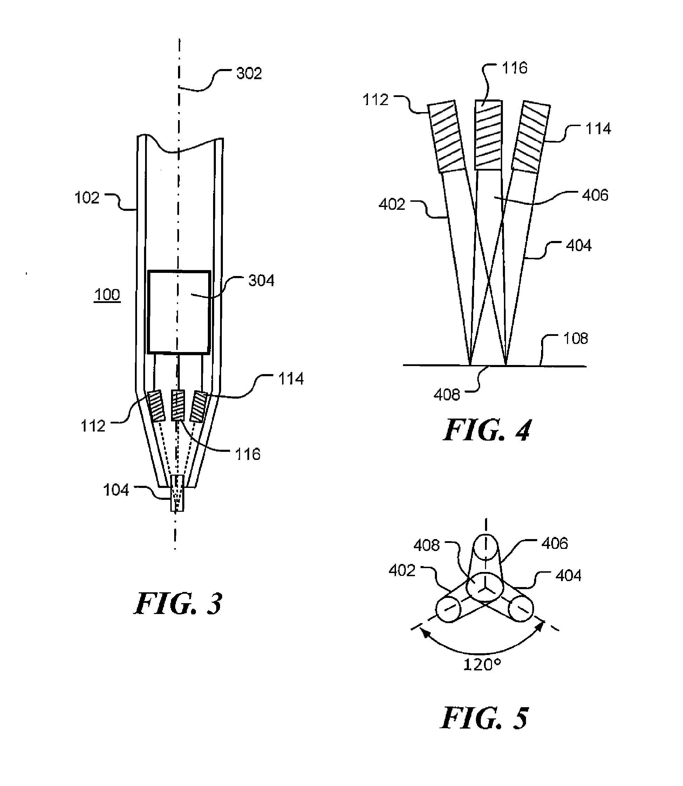

In one exemplary embodiment of the stylus as shown in **FIG. 3****,** the directional antennas of the stylus 100 comprise three antennas, 112, 114 and 116, which are spaced at substantially 120° intervals around the longitudinal axis 302 and located in the body 102 of the stylus at a distance from the tip. Also disposed in the body 102 is a communication circuit 304. In operation, the communication circuit 304 excites the antennas to produce an electromagnetic field directed (as indicated by the broken lines) towards the tip 104 of the stylus. This electromagnetic field is sensed at multiple positions on the sensing surface to provide multiple signals. A position on the sensing surface is determined from these multiple signals, based on where the electromagnetic field is at a maximum.

In the embodiment depicted in **FIG. 3**, the first, second and third directional antennas (112, 114 and 116) are excited with first, second and third signal, respectively, from the communication circuit 304. The antennas generate first, second and third electromagnetic fields, respectively, directed towards the tip 104 of the stylus. In this embodiment, the antennas are disposed equidistant from the tip of the stylus, which enables them to be driven by a common excitation signal. In general, the antennas are driven to produce a maximum in the electromagnetic field in the region of the tip 104.

A diagrammatic representation of the antennas and the associated electromagnetic fields is shown in **FIG. 4**. As shown in the figure, the first, second and third antennas (112, 114 and 116, respectively) generate first, second and third electromagnetic fields (402, 404 and 406, respectively), directed towards the region 408 where the tip of the stylus (not shown) is in contact with the sensing surface 108. This arrangement results in a combined electromagnetic field strength that has a maximum value in the region 408. This maximum is dependent upon on the respective orientations of the antennas. However, the maximum is consistently aligned with the tip of the stylus, even when the stylus is tilted with respect to the sensing surface 108.

**FIG. 5** is a diagrammatic representation of the electromagnetic fields (402, 404 and 406) generated by the antennas of the stylus as viewed from above the sensing surface. This corresponds to arrangement shown in **FIG. 4**, but viewed from above. Since the antennas are located at substantially 120° increments around the body of the stylus in this embodiment, the electromagnetic fields they produce (402, 404 and 406) are also produced at substantially 120° increments, as indicated by the broken lines. The individual electromagnetic fields combine to a form a maximum field in the region 408 at the tip of the stylus.

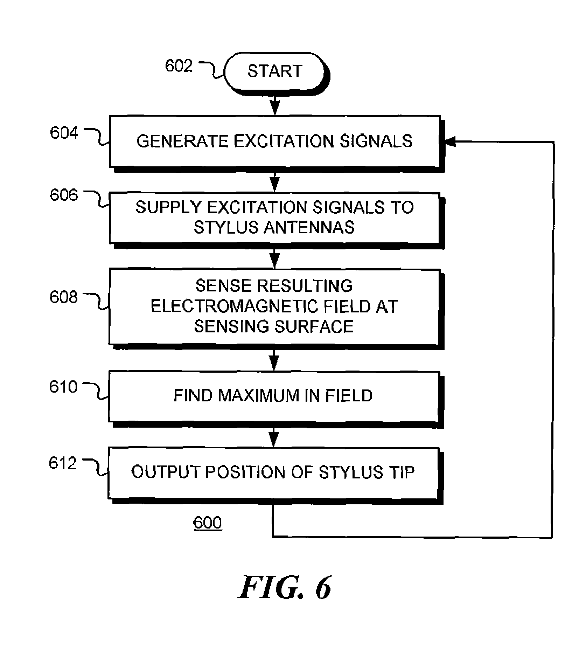

**FIG. 6** is a flow chart 600 of a method for sensing stylus tip location. Following start block 602 in **FIG. 6****,** excitation signals are generated for each antenna of a stylus at block 604. At block 606, the excitation signals are supplied to the multiple antennas of the stylus to produce an electromagnetic field directed towards the tip of the stylus. For example, the stylus may have 3 antenna located equidistant from the tip of the stylus and a common excitation signal may be supplied to each of the antenna. At block 608, the electromagnetic field generated by the antennas is sensed at the sensing surface of a host electronic device to provide a number of signals. The signal may correspond, for example, to different positions on the sensing surface or to different grid lines on the sensing surface. At block 610, the position of the tip of the stylus on the drawing surface is determined as the position for which the electromagnetic field is at a maximum. At block 612, the detected position of the stylus tip is output for use by the host electronic device.

The implementations of the present disclosure described above are intended to be merely exemplary. It will be appreciated by those of skill in the art that alterations, modifications and variations to the illustrative embodiments disclosed herein may be made without departing from the scope of the present disclosure. Moreover, selected features from one or more of the above-described embodiments may be combined to create alternative embodiments not explicitly shown and described herein.

The present disclosure may be embodied in other specific forms without departing from its spirit or essential characteristics. The described example embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A stylus 100 comprising:
a body 100 including a plurality of directional antennas (112, 114 and 116) displaced from each other and a tip 104 of the body 100 , each antenna configured to radiate an electromagnetic field directed towards the tip 104.

2. A stylus 100 in accordance with claim 1, wherein the plurality of directional antennas (112, 114 and 116) comprises three directional antennas spaced at substantially 120° intervals around a longitudinal axis 302 of the stylus 100.

3. A stylus 100 in accordance with claim 1, wherein the plurality of directional antennas (112, 114, 116) are equidistant from the tip 104 of the stylus 100.

4. A stylus 100 in accordance with claim 3, further comprising:
a communication circuit 304 operable to drive the plurality of directional antennas (112, 114, 116) in phase with one another.

5. A system comprising:
a stylus 100 comprising:
a body 102 including a plurality of directional antennas (112, 114, 116) displaced from each other and a tip 104 of the body 102, each antenna configured to radiate an electromagnetic field directed towards the tip 104; and
a host electronic device 110 comprising:
a sensing surface 108 responsive to the electromagnetic fields radiated by the plurality of directional antennas (112, 114 and 116) of the stylus 100, the sensing surface 108 coupled to a sensing circuit 204, the sensing circuit 204 configured to determine a position of the stylus 100 based on a maximum combined electromagnetic field on the sensing surface 108.

6. A system in accordance with claim 5, further comprising a display screen 216 operable to render an image 106 dependent upon the position of the stylus 100.

7. A system in accordance with claim 5, wherein the plurality of directional antennas (112, 114 and 116) of the stylus comprises three directional antennas spaced at substantially 120° intervals around a longitudinal axis 302 of the stylus 100.

8. A method for detecting a position of a tip 104 of a stylus 100 relative to a sensing surface 108, the method comprising:
exciting a plurality of antennas of the stylus to independently produce respective electromagnetic fields directed towards the tip 104 of the stylus 100;
sensing the electromagnetic fields at a plurality of positions on the sensing surface 108 to provide a plurality of signals; and
detecting, from the plurality of signals, a position relative to the sensing surface 108 for which a combined electromagnetic field is at a maximum.

9. A method for generating an electromagnetic field at a tip 104 of a stylus 100, the method comprising:
exciting a first directional antenna 112 of the stylus 100 with a first signal to generate a first electromagnetic field directed towards the tip 104 of the stylus 100;
exciting a second directional antenna 114 of the stylus 100 with a second signal to generate a second electromagnetic field directed towards the tip 104 of the stylus 100; and
exciting a third directional antenna 116 of the stylus 100 with a third signal to generate a third electromagnetic field directed towards the tip 104 of the stylus 100,
where the first, second and third antennas (112, 114 and 116) are spaced apart from each other and the tip 104 of the stylus 100.

10. A method in accordance with claim 9, wherein the first, second and third antennas (112, 114 and 116) are equidistant from the tip 104 of the stylus 100 and wherein first, second and third signals comprise a common signal.

11. A method for generating an electromagnetic field from a stylus 100 having a plurality of antennas (112, 114 and 116) and a tip 104, the method comprising:
for each antenna of the plurality of antennas:
generating an excitation signal dependent upon the position of the antenna with respect to the tip 104 of the stylus 100; and
supplying the excitation signal to the antenna (112, 114 or 116).

12. A method in accordance with claim 11, wherein the plurality of antenna (112, 114 and 116) are equidistant from the tip 104 of the stylus 100, and wherein, for each antenna, generating an excitation signal dependent upon the position of the antenna with respect to the tip 104 of the stylus 100 comprises generating a common excitation signal and supplying the common excitation signal to each antenna of the plurality of antennas (112, 114 and 116).

13. A method in accordance with claim 11, wherein the plurality of antennas (112, 114 and 116) are uniformly located around a longitudinal axis 302 of the stylus 100.

14. A method in accordance with claim 11, wherein the plurality of antennas (112, 114 and 116) comprises three antennas spaced at substantially 120° intervals around a longitudinal axis 302 of the stylus 100.

## Amended claims

### Amended claims in accordance with Rule 137(2) EPC.

**1.** A stylus 100 comprising:
a body 100 including a plurality of directional antennas (112, 114 and 116) displaced from each other and a tip 104 of the body 100 , each antenna configured to radiate an electromagnetic field directed towards the tip 104; and
wherein the plurality of directional antennas (112, 114 and 116) are respectively orientated to produce a maximum in the electromagnetic field in the region of the tip 104.

**2.** A stylus 100 in accordance with claim 1, wherein the plurality of directional antennas (112, 114 and 116) comprises three directional antennas spaced at substantially 120° intervals around a longitudinal axis 302 of the stylus 100.

**3.** A stylus 100 in accordance with claim 1, wherein the plurality of directional antennas (112, 114, 116) are equidistant from the tip 104 of the stylus 100.

**4.** A stylus 100 in accordance with claim 3, further comprising:
a communication circuit 304 operable to drive the plurality of directional antennas (112, 114, 116) in phase with one another.

**5.** A system comprising:
a stylus 100 comprising:
a body 102 including a plurality of directional antennas (112, 114, 116) displaced from each other and a tip 104 of the body 102, each antenna configured to radiate an electromagnetic field directed towards the tip 104; and
a host electronic device 110 comprising:
a sensing surface 108 responsive to the electromagnetic fields radiated by the plurality of directional antennas (112, 114 and 116) of the stylus 100, the sensing surface 108 coupled to a sensing circuit 204, the sensing circuit 204 configured to determine a position of the stylus 100 based on a maximum combined electromagnetic field on the sensing surface 108.

**6.** A system in accordance with claim 5, further comprising a display screen 216 operable to render an image 106 dependent upon the position of the stylus 100.

**7.** A system in accordance with claim 5, wherein the plurality of directional antennas (112, 114 and 116) of the stylus comprises three directional antennas spaced at substantially 120° intervals around a longitudinal axis 302 of the stylus 100.

**8.** A method for generating an electromagnetic field from a stylus 100 having a plurality of antennas (112, 114 and 116) and a tip 104, the method comprising:
for each antenna of the plurality of antennas:
generating an excitation signal dependent upon the position of the antenna with respect to the tip 104 of the stylus 100; and
supplying the excitation signal to the antenna (112, 114 or 116);
wherein the plurality of antennas (112, 114 or 116) are respectively orientated to produce a maximum in the electromagnetic field in the region of the tip 104.

**9.** A method in accordance with claim 8, wherein the plurality of antenna (112, 114 and 116) are equidistant from the tip 104 of the stylus 100, and wherein, for each antenna, generating an excitation signal dependent upon the position of the antenna with respect to the tip 104 of the stylus 100 comprises generating a common excitation signal and supplying the common excitation signal to each antenna of the plurality of antennas (112, 114 and 116).

**10.** A method in accordance with claim 8, wherein the plurality of antennas (112, 114 and 116) are uniformly located around a longitudinal axis 302 of the stylus 100.

**11.** A method in accordance with claim 8, wherein the plurality of antennas (112, 114 and 116) comprises three antennas spaced at substantially 120° intervals around a longitudinal axis 302 of the stylus 100.

**12.** A method in accordance with claim 8, the method further comprising:
sensing the electromagnetic fields at a plurality of positions on the sensing surface 108 to provide a plurality of signals; and
detecting, from the plurality of signals, a position relative to the sensing surface 108 for which a combined electromagnetic field is at a maximum.
